# EUROPEAN PATENT SPECIFICATION

(11) **EP 1 972 836 B1**
(45) Date of publication and mention of the grant of the patent: **26.12.2012**
(21) Application number: 08250971.2
(22) Date of filing: 19.03.2008
(51) Int. Cl.: F16H 61/662

(54) **Electronically-controlled continuously variable transmission**
Elektronisch geregeltes, stufenlos verstellbares Getriebe
Variateur continu de vitesse commandé électroniquement

(30) Priority: 20.03.2007 JP 2007072359; 25.10.2007 JP 2007277114
(43) Date of publication of application: 24.09.2008
(73) Proprietor: Yamaha Hatsudoki Kabushiki Kaisha, Iwata-shi, Shizuoka 438-8501 (JP)
(72) Inventor: Ishioka, Kazutoshi c/o Yamaha Hatsudoki Kabushiki Kaisha, Iwata-shi, Shizuoka-ken 438-8501 (JP)
(74) Representative: Moreland, David

(56) References cited:
- EP-A2- 0 895 005
- EP-A2- 1 400 728
- EP-A2- 1 582 778
- WO-A1-2006/009014
- US-A- 5 890 991
- US-A1- 2004 171 445
- US-A1- 2004 235 615
- US-A1- 2006 063 641
- US-B2- 7 112 154

## Description

### FIELD OF THE INVENTION

The present invention relates to an electronically-controlled continuously variable transmission, a power unit having such a transmission, a vehicle, a controller for an electronically-controlled continuously variable transmission, and a method of controlling an electronically-controlled continuously variable transmission.

### BACKGROUND TO THE INVENTION

WO 2006/009014 discloses a method of controlling an electronically-controlled belt continuously variable transmission (an electronically-controlled continuously variable transmission is hereinafter referred to as "ECVT") as described below.

A target change-gear ratio is determined by a throttle opening signal and a vehicle speed signal. A target sheave position of a movable sheave half of a primary sheave is calculated from the determined target change-gear ratio. Then, a voltage such that the movable sheave half of the primary sheave is displaced to the calculated target sheave position is applied to an electric motor for driving the movable sheave half of the primary sheave. Thereby, the change-gear ratio is controlled to reach the target change-gear ratio.

However, a problem occurs in the method of controlling the change-gear ratio, disclosed in WO 2006/009014. That is, as a centrifugal clutch disposed between an output shaft of the ECVT and the drive wheel wears out with time, an engine speed increases during a low-speed operation. Such a problem of an increase in engine speed occurs particularly during idling.

Another example of a transmission is described by US2004171445, which describes a hydraulically operated V-belt style continuously variable transmission. A shift control section of a transmission controller determines a target input speed of the transmission on the basis of a predetermined shift map by using a vehicle speed that can be determined from the secondary pulley revolution speed and an accelerator pedal depression amount. The shift control section determines a target gear ratio by dividing the target input speed by the secondary pulley revolution speed. The shift control section calculates an actual gear ratio by dividing the primary pulley revolution speed by the secondary pulley revolution and determines a shift speed for gradually bringing the actual gear ratio close to the target ratio at a target shift speed while carrying out disturbance compensation according to a difference between an actual gear ratio and the target gear ratio. When an actual gear ratio is gradually brought close to the target gear ratio, the target gear ratio is achieved by setting an intermediate gear ratio between the actual gear ratio and the target gear ratio.

A further example is described in EP0895005, which describes a V belt type continuously variable transmission. A signal from an input shaft rotation sensor, which detects an input rotation speed of the primary pulley, i.e. the input shaft to the transmission, and a signal from an output shaft rotation sensor, which detects an output shaft rotation speed of the secondary pulley, i.e. an output shaft rotation speed of the transmission, are input to a control unit. A target input shaft rotation speed computing unit of the control unit computes a target input shaft rotation speed according to a vehicle speed based on the output shaft rotation speed from the secondary pulley rotation sensor and the throttle opening from the throttle opening sensor. The target input shaft rotation speed computing unit also computes a variation amount of the target input shaft rotation speed. A target speed ratio computing unit of the control unit divides the target input shaft rotation speed by the detected output shaft rotation speed, and computes a target speed ratio. A command speed ratio computing unit computes a command speed ratio based on the target speed ratio and a dynamic characteristic time constant. The command speed ratio is determined such that a real speed ratio follows the target speed ratio with the determined dynamic characteristics. A stepping motor command value computing unit computes a command value output to a stepping motor that controls the transmission ratio based on the command speed ratio from the command speed ratio computing unit, the output shaft rotation speed and the input shaft rotation speed.

Another example of a transmission is described in US2004/235615. This document, which represents the closest prior art, describes a motorcycle that includes a centrifugal clutch mechanism disposed between the transmission and a rear wheel, for connection and disconnection between an engine and the rear wheel. An ECU of the motorcycle stores an idle-up use transmission map and a warmed-up use transmission map, and carries out transmission control of the transmission based on the idle-up use transmission map at the start of the engine, and switches the idle-up use transmission map to the warmed-up use transmission map when at least one of a first condition that a predetermined time period preset based on the temperature of the engine has elapsed after the start of the engine and a second condition that rotational speed of the engine is lower than a predetermined idling engine speed is satisfied. Storage means of the ECU stores the transmission maps, each transmission map comprising predetermined transmission ratio values set in association with throttle valve opening and vehicle speed. A CPU of the ECU searches the transmission map to retrieve a transmission ratio value corresponding to values of the throttle valve opening, the engine rotational speed, and the vehicle speed detected respectively by a throttle position sensor, an engine speed sensor and a vehicle speed sensor, and drives a CVT motor to change the transmission ratio of the CVT to the retrieved transmission ratio value, thereby controlling the transmission ratio of the CVT.

The present invention is made in view of the foregoing problem, and an object of the invention is to prevent an increase in engine speed during low-speed operation.

### SUMMARY OF THE INVENTION

Aspects of the present invention are set forth in the independent claims. Preferred features of the invention are set forth in the dependent claims.

Described herein is an electronically-controlled continuously variable transmission including: a change-gear mechanism; a centrifugal clutch; a control unit; and an output shaft rotational speed sensor. The change-gear mechanism has an input shaft, an output shaft and an actuator. The actuator changes a change-gear ratio between the input shaft and the output shaft. The centrifugal clutch is connected to the output shaft. The centrifugal clutch is configured to transmit rotation of the output shaft to a drive wheel or rear wheel. The control unit is adapted to control the actuator. The output shaft rotational speed sensor detects a rotational speed of the output shaft. The output shaft rotational speed sensor outputs the detected rotational speed of the output shaft to the control unit. The control unit is adapted to control the actuator based on a target change-gear ratio obtained by dividing a target rotational speed of the input shaft by the rotational speed of the output shaft such that the target change gear ratio varies with deterioration of the centrifugal clutch.

Described herein is a power unit including the electronically-controlled continuously variable transmission of the present invention.

Described herein is a vehicle including a power unit and a rear or drive wheel. The power unit has a drive source, and an electronically-controlled continuously variable transmission. The electronically-controlled continuously variable transmission includes: a change-gear mechanism; a centrifugal clutch; a control unit; and an output shaft rotational speed sensor. The change-gear mechanism has an input shaft, an output shaft and an actuator. The actuator changes a change-gear ratio between the input shaft and the output shaft. The centrifugal clutch is connected to the output shaft. The centrifugal clutch is configured to transmit rotation of the output shaft to the drive wheel or rear wheel. The control unit is adapted to control the actuator. The output shaft rotational speed sensor detects a rotational speed of the output shaft. The output shaft rotational speed sensor outputs the detected rotational speed of the output shaft to the control unit. The control unit is adapted to control the actuator based on a target change-gear ratio obtained by dividing a target rotational speed of the input shaft by the rotational speed of the output shaft such that the target change gear ratio varies with deterioration of the centrifugal clutch.

Described herein is a controller for controlling an electronically-controlled continuously variable transmission including: a change-gear mechanism having an input shaft, an output shaft, and an actuator for changing a change-gear ratio between the input shaft and the output shaft; a centrifugal clutch connected to the output shaft, the centrifugal clutch being configured to transmit rotation of the output shaft to a drive wheel or rear wheel; a control unit for controlling the actuator; and an output shaft rotational speed sensor for detecting a rotational speed of the output shaft.

The controller is adapted 10 control the actuator based on a target change-gear ratio obtained by dividing a target rotational speed of the input shaft by the rotational speed of the output shaft such that the target change gear ratio varies with deterioration of the centrifugal clutch.

Described herein is a method of controlling an electronically-controlled continuously variable transmission including: a change-gear mechanism having an input shaft, an output shaft, and an actuator for changing a change-gear ratio between the input shaft and the output shaft; a centrifugal clutch connected to the output shaft, the centrifugal clutch being configured to transmit rotation of the output shaft to a drive wheel or rear wheel; a control unit for controlling the actuator; and an output shaft rotational speed sensor for detecting a rotational speed of the output shaft.

The control method includes controlling the actuator based on a target change-gear ratio obtained by dividing a target rotational speed of the input shaft by the rotational speed of the output shaft such that the target change gear ratio varies with deterioration of the centrifugal clutch.

The present invention can suppress increase in an engine speed during low-speed operation.

### BRIEF DESCRIPTION OF THE DRAWINGS

These and other aspects of the present invention will now be described, by way of example only, with reference to the accompanying drawings, in which:
FIG. 1 is a side view of a two-wheeled motorized vehicle embodying the present invention;
FIG. 2 is a sectional view of an engine unit of the vehicle of FIG. 1;
FIG. 3 is a partial sectional view illustrating a construction of an ECVT;
FIG. 4 is a block diagram illustrating a system for controlling the two-wheeled motorized vehicle;
FIG. 5 is a block diagram illustrating transmission control;
FIG. 6 illustrates an example of a map for determining a target engine speed;
FIG. 7 is a graph illustrating rotational speeds of an input shaft and an output shaft when a transmission, in which a target change-gear ratio is determined based on a throttle opening and a vehicle speed, is in initial use;
FIG. 8 is a graph illustrating rotational speeds of the input shaft and the output shaft after the transmission, in which the target change-gear ratio is determined based on the throttle opening and the vehicle speed, deteriorates with time;
FIG. 9 is a graph illustrating rotational speed of the input shaft and of the output shaft upon deterioration of a transmission with time in the embodiment of the invention;
FIG. 10 is a block diagram for controlling a transmission according to a first variation;
FIG. 11 is a block diagram for controlling a transmission according to a second variation;
FIG. 12 is a block diagram for controlling a transmission according to a third variation; and
FIG. 13 is a block diagram for controlling a transmission according to a fourth variation.

### DETAILED DESCRIPTION OF THE DRAWINGS

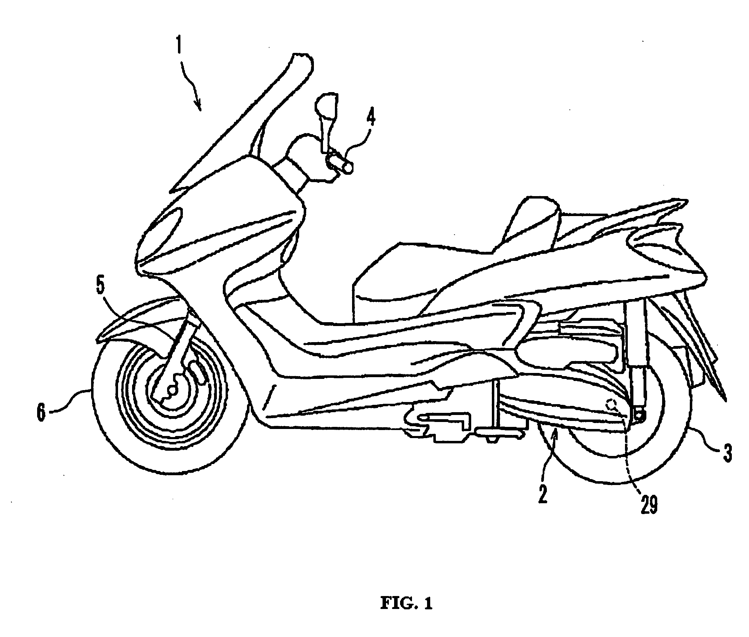

An example of an embodiment of the present invention will be hereinafter described in detail, using a two-wheeled motorized vehicle 1 shown in FIG. 1. The two-wheeled motorized vehicle 1. has a body frame (not shown). A power unit 2 is suspended from the body frame. A rear wheel 3 is provided at a rear end of the power unit 2. In the embodiment of the invention, the rear wheel 3 forms a drive wheel for driving a wheel with power of the power unit 2.

The body frame has a head pipe (not shown) extending downward from steering handlebars 4. Front forks 5 are connected to a bottom end of the head pipe. A front wheel 6 is rotatably attached to lower ends of the front forks 5. The front wheel 6, not connected to the power unit 2, forms a driven wheel.

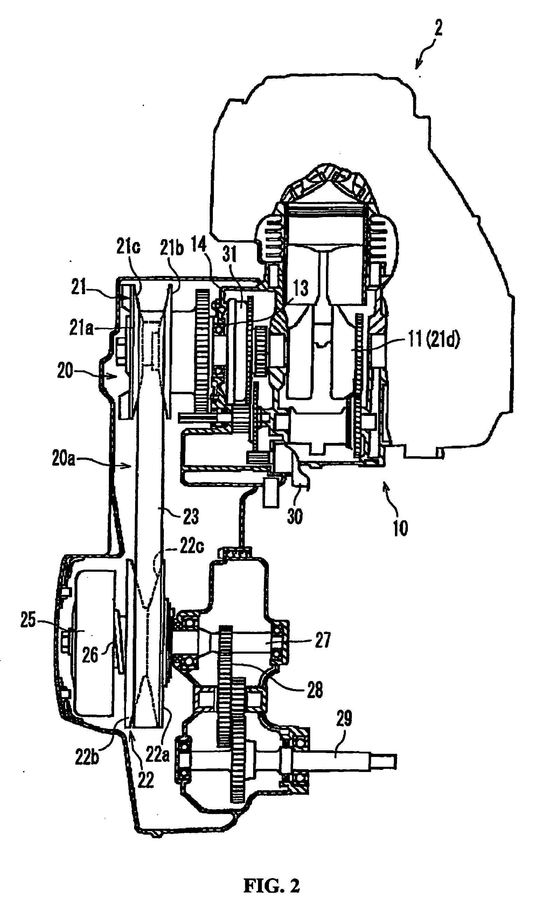

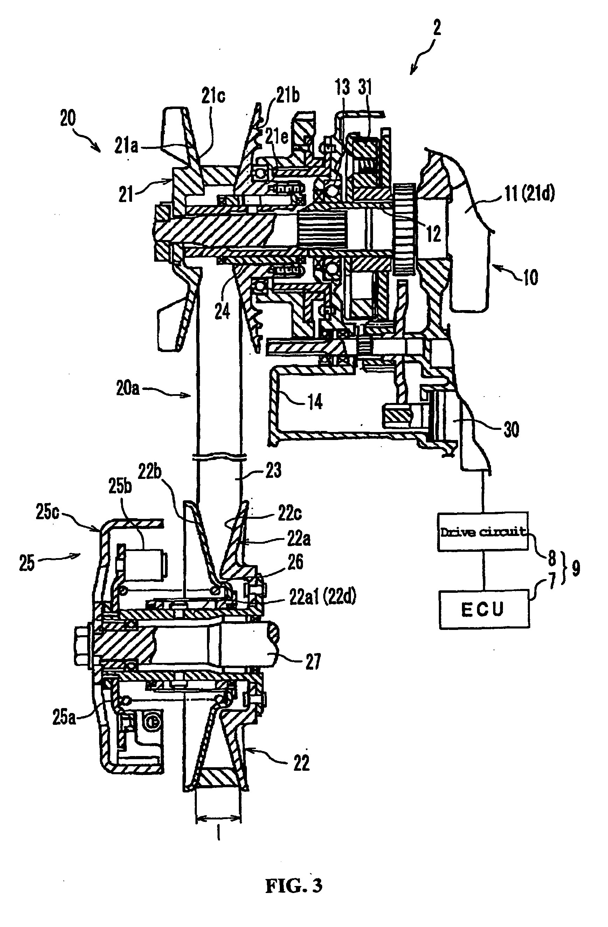

The construction of the power unit 2 will be described with reference to FIGs. 2 and 3.

As shown in FIGs. 2 and 3, the power unit 2 has an engine (internal combustion engine) 10 and a transmission 20. In the embodiment of the invention, the engine 10 is described as a forced-air-cooled four-stroke engine. However, the engine 10 may be other type of engine. For example, the engine 10 may be a water-cooled engine, oilcooled engine or the like. The engine 10 may be a two-stroke engine.

As shown in FIG. 3, the engine 10 has a crankshaft 11. A sleeve 12 is spline-fitted onto an outer circumference of the crankshaft 11. The sleeve 12 is rotatably supported by a housing 14 via a bearing 13. A one-way clutch 31 connected to a motor 30, serving as an actuator, is mounted onto a periphery of the sleeve 12.

As shown in FIG. 3, the transmission 20 is constituted by a change-gear mechanism 20a and a control unit 9 for controlling the change-gear mechanism 20a. The control unit 9 is constituted by an ECU 7 serving as a computing unit, and a drive circuit 8 serving as a drive unit. In the embodiment of the invention, the change-gear mechanism 20a is described as a belt-type ECVT as one example. A belt of the ECVT may be a resin belt, a metal belt, or other type of belt. In addition, the change-gear mechanism 20a is not limited to a belt-type ECVT. For example, the change-gear mechanism 20a may be a toroidal type ECVT.

The change-gear mechanism 20a is provided with a primary sheave 21, a secondary sheave 22 and a V-belt 23. The V-belt 23 is wrapped around the primary sheave 21 and the secondary sheave 22. The V-belt 23 is formed into an approximately V-shape in section.

The primary sheave 21 is connected to the crankshaft 11 as an input shaft 21d. The primary sheave 21 rotates together with the crankshaft 11. The primary sheave 21 includes a primary fixed sheave half 21a and a primary movable sheave half 21b. The primary fixed sheave half 21a is fixed to one end of the crankshaft 11. The primary movable sheave half 21b is located opposed to the primary fixed sheave half 21a. The primary movable sheave half 21b is movable in the axial direction of the crankshaft 11. One surface of the primary fixed sheave half 21a and one surface of the primary movable sheave half 21b are opposed to each other, which form a belt groove 21c onto which the V-belt 23 is wounded. The belt groove 21c is formed wider toward the radially outer side of the primary sheave 21.

As shown in FIG. 3, the primary movable sheave half 21b has a cylindrical boss 21e through which the crankshaft 11 passes. A cylindrical slider 24 is fixed to an inner side of the boss 21e. The primary movable sheave half 21b is integral with the slider 24 and is movable in the axial direction of the crankshaft 11. Accordingly, a width of the belt groove 21c is variable.

The width of the belt groove 21c of the primary sheave 21 is varied when the motor 30 actuates the primary movable sheave half 21b in the axial direction of the crankshaft 11. That is, the transmission 20 is an ECVT in which the change-gear ratio is electronically controlled. In the embodiment of the invention, the motor 30 is driven by pulse width modulation (PWM drive). However, the method for driving the motor 30 is not particularly limited to the PWM drive. For example, the motor 30 may be driven by pulse-amplitude modulation. Alternatively, the motor 30 may be a stepper motor. In addition, in the embodiment of the invention, the motor 30 is used as an example of the actuator. Alternatively, other than the motor 30, a hydraulic actuator may be used as the actuator, for example.

The secondary sheave 22 is located rearward of the primary sheave 21. The secondary sheave 22 is mounted to a secondary sheave shaft 27 via a centrifugal clutch 25. To be more specific, the secondary sheave 22 includes a secondary fixed sheave half 22a and a secondary movable sheave half 22b. The secondary movable sheave half 22b is opposed to the secondary fixed sheave half 22a. The secondary fixed sheave half 22a includes a cylindrical portion 22a1. In the embodiment of the invention, the cylindrical portion 22a1 forms an output shaft 22d of the transmission 20. The secondary fixed sheave half 22a is connected to the secondary sheave shaft 27 via the centrifugal clutch 25. The secondary movable sheave half 22b is movable in the axial direction of the secondary sheave shaft 27. One surface of the secondary fixed sheave half 22a and one surface of the secondary movable sheave half 22b are opposed to each other, which form a belt groove 22c onto which the V-belt 23 is wounded. The belt groove 22c is formed wider toward the radially outer side of the secondary sheave 22.

The secondary movable sheave half 22b is urged by a spring 26 in the direction that a width of the belt groove 22c decreases. In view of this, when the motor 30 is driven, and the width of the belt groove 21c of the primary sheave 21 decreases, a diameter with which the V-belt 23 is wrapped around the primary sheave 21 increases, while the V-belt 23 on the side of the secondary sheave 22 is pulled radially inward. Thus, the secondary movable sheave half 22b moves against the urging force of the spring 26 in the direction that the width of the belt groove 22c increases. Therefore, the diameter with which the V-belt 23 is wrapped around the secondary sheave 22 decreases. This results in a change in change-gear ratio of the change-gear mechanism 20a.

The centrifugal clutch 25 is engaged or disengaged depending on a rotational speed of the cylindrical portion 22al as the output shaft 22d included in the secondary fixed sheave half 22a. That is, if the rotational speed of the output shaft 22d is below a predetermined rotational speed, the centrifugal clutch 25 is disengaged. Thus, rotations of the secondary fixed sheave half 22a are not transmitted to the secondary sheave shaft 27. In contrast, if the rotational speed of the output shaft 22d is equal to or higher than a predetermined rotational speed, the centrifugal clutch 25 is engaged. Thus, rotations of the secondary fixed sheave half 22a are transmitted to the secondary sheave shaft 27.

As shown in FIG. 3, the centrifugal clutch 25 includes a centrifugal plate 25a, a centrifugal weight 25b, and a clutch housing 25c. The centrifugal plate 25a rotates together with the secondary fixed sheave half 22a. That is, the centrifugal plate 25a rotates together with the output shaft 22d. The centrifugal weight 25b is supported by the centrifugal plate 25a such that it is displaceable in the radial direction of the centrifugal plate 25a. The clutch housing 25c is fixed to one end of the secondary sheave shaft 27. A speed reducing mechanism 28 (see FIG. 2) is connected to the secondary sheave shaft 27. The secondary sheave shaft 27 is connected to an axle 29 via the speed reducing mechanism 28. The rear wheel 3 is mounted to the axle 29. Therefore, the clutch housing 25c is connected to the drive wheel or the rear wheel 3 via the secondary sheave shaft 27, the speed reducing mechanism 28 and the axle 29.

The clutch housing 25c engages with or disengages from the centrifugal plate 25a depending on the rotational speed of the output shaft 22d. Specifically, if the rotational speed of the output shaft 22d is equal to or higher than a predetermined rotational speed, the centrifugal weight 25b uses a centrifugal force to move toward the radially outer side of the centrifugal plate 25a to contact the clutch housing 25c. This allows the centrifugal plate 25a and the clutch housing 25c to engage with each other. When the centrifugal plate 25a and the clutch housing 25c engage with each other, rotations of the output shaft 22d are transmitted to the drive wheel or the rear wheel 3 through the clutch housing 25c, the secondary sheave shaft 27, the speed reducing mechanism 28, and the axle 29. In contrast, if the rotational speed of the output shaft 22d is below a predetermined rotational speed, the centrifugal force applied to the centrifugal weight 25b decreases, so that the centrifugal weight 25b moves away from the clutch housing 25c. Therefore, rotations of the output shaft 22d are not transmitted to the clutch housing 25c. Consequently, the rear wheel 3 does not rotate.

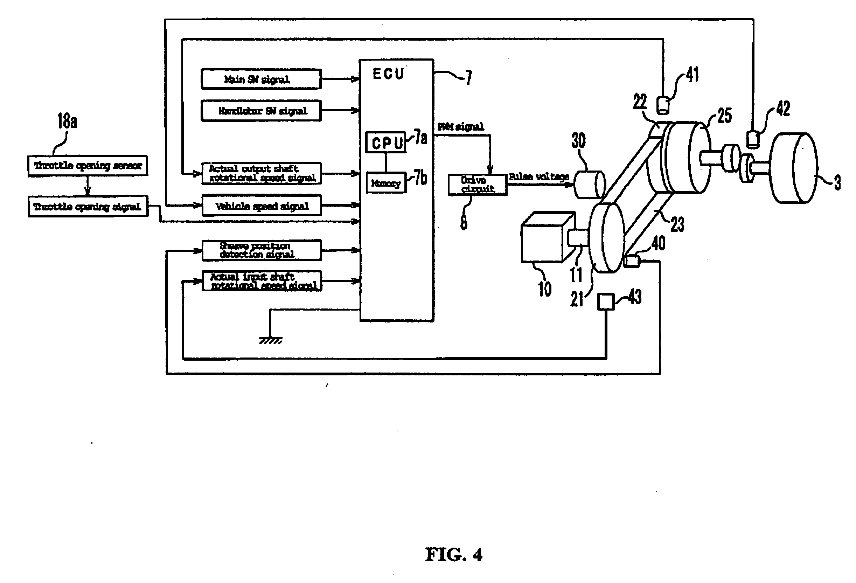

A system for controlling the two-wheeled motorized vehicle 1 will now be described in detail with reference to FIG. 4.

As shown in FIG. 4, a sheave position sensor 40 is connected to the ECU 7. The sheave position sensor 40 detects a position of the primary movable sheave half 21b of the primary sheave 21 relative to the primary fixed sheave half 21a. In other words, the sheave position sensor 40 detects a distance (I) between the primary fixed sheave half 21a and the primary movable sheave half 21b in the axial direction of the crankshaft 11. The sheave position sensor 40 outputs the detected distance (I) to the ECU 7 as a sheave position detection signal. The sheave position sensor 40 may be formed by a potentiometer, for example.

In addition, a primary sheave rotation sensor 43 as an input shaft rotational speed sensor, a secondary sheave rotation sensor 41 as an output shaft rotational speed sensor, and a vehicle speed sensor 42 are connected to the ECU 7. The primary sheave rotation sensor 43 detects a rotational speed of the primary sheave 21 or a rotational speed of the input shaft 21d. The primary sheave rotation sensor 43 outputs the detected rotational speed of the input shaft 21d to the ECU 7 as an actual input shaft rotational speed signal. The secondary sheave rotation sensor 41 detects a rotational speed of the secondary sheave 22 or a rotational speed of the output shaft 22d. The secondary sheave rotation sensor 41 outputs the detected rotational speed of the output shaft 22d to the ECU 7 as an actual output shaft rotational speed signal. The vehicle speed sensor 42 detects a rotational speed of the rear wheel 3. The vehicle speed sensor 42 outputs a vehicle speed signal to the ECU 7 based on the detected rotational speed.

A handlebar switch attached to the steering handlebars 4 is connected to the ECU 7. The handlebar switch outputs a handlebar SW signal when a rider operates the handlebar switch.

As described above, a throttle opening sensor 18a outputs a throttle opening signal to the ECU 7.

The ECU 7 includes a central processing unit (CPU) 7a as a computing unit and a memory 7b connected to the CPU 7a. The memory 7b stores various settings, such as a map 70 for determining a target engine speed, which will be discussed later.

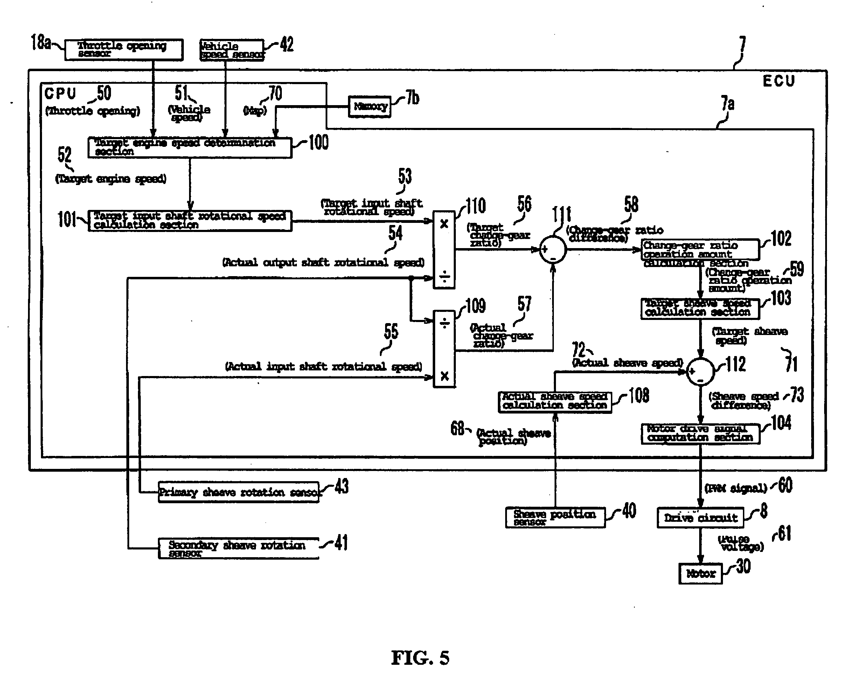

A method of controlling the transmission 20 according to the embodiment of the invention will now be described with reference to FIG. 5. In this embodiment, as shown in FIG. 5, the electric motor 30, serving as an actuator, is controlled such that a difference is reduced between a target change-gear ratio 56, which is obtained by dividing a target input shaft rotational speed 53 by an actual output shaft rotational speed 54, and an actual change-gear ratio 57, which is obtained by dividing an actual input shaft rotational speed 55 by the actual output shaft rotational speed 54. Specifically, the motor 30 is controlled such that the target change-gear ratio 56 and the actual change-gear ratio 57 are approximately equal.

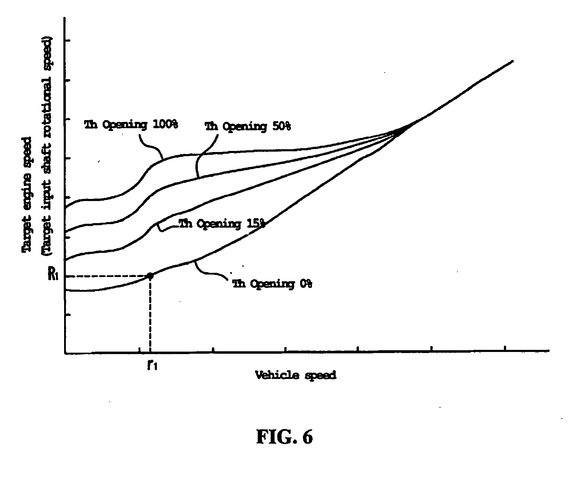

The method of controlling the transmission 20 according to the embodiment of the invention is hereinafter described in detail with reference to FIG. 5. First, the throttle opening sensor 18a outputs a throttle opening 50 to a target engine speed determination section 100 provided in the CPU 7a. The vehicle speed sensor 42 outputs a vehicle speed 51 to the target engine speed determination section 100. The target engine speed determination section 100 retrieves the map 70 for determining a target engine speed from the memory 7b. As exemplified in FIG. 6, a relationship between a vehicle speed for respective throttle openings and a target engine speed is established in the map 70 for determining a target engine speed. The target engine speed determination section 100 determines a target engine speed 52 based on the map 70 for determining a target engine speed, the throttle opening 50 and the vehicle speed 51. For example, the target engine speed 52 is determined to be R₁, where the throttle opening is 0% and the vehicle speed is r₁, as shown in FIG. 6. The target engine speed determination section 100 outputs the determined target engine speed 52 to a target input shaft rotational speed calculation section 101.

For convenience of explanation, FIG. 6 only illustrates the relationships where the throttle opening (Th opening) is 0%, 15%, 50% and 100%.

The target input shaft rotational speed calculation section 101 calculates a target input shaft rotational speed 53 from the inputted target engine speed 52. That is, the target input shaft rotational speed calculation section 101 calculates a target rotational speed of the input shaft 21d from the inputted target engine speed 52. The target input shaft rotational speed calculation section 101 outputs the calculated target input shaft rotational speed 53 to a division section 110. In this embodiment, because the crankshaft 11 of the engine 10 and the input shaft 21d are a common member, the target engine speed 52 and the target input shaft rotational speed 53 are equal. That is, the target input shaft rotational speed calculation section 101 outputs the target engine speed 52 as the target input shaft rotational speed 53.

The division section 110 divides the target input shaft rotational speed 53, which is inputted from the target input shaft rotational speed calculation section 101, by the actual output shaft rotational speed 54, which is outputted from the secondary sheave rotation sensor 41, in order to calculate a target change-gear ratio 56. The division section 110 outputs the calculated target change-gear ratio 56 to a subtraction section 111.

In turn, the division section 109 divides the actual input shaft rotational speed 55, which is outputted from the primary sheave rotation sensor 43, by the actual output shaft rotational speed 54 in order to calculate an actual change-gear ratio 57. The division section 109 outputs the calculated actual change-gear ratio 57 to the subtraction section 111. The actual change-gear ratio 57 is an actual change-gear ratio of the transmission 20.

The subtraction section 111 subtracts the actual change-gear ratio 57 from the target change-gear ratio 56 in order to calculate a change-gear ratio difference 58. The subtraction section 111 outputs the calculated change-gear ratio difference 58 to a change-gear ratio operation amount calculation section 102. The change-gear ratio operation amount calculation section 102 calculates a change-gear ratio operation amount 59, which reduces a difference between the target change-gear ratio 56 and the actual change-gear ratio 57, based on the change-gear ratio difference 58. Specifically, the change-gear ratio operation amount calculation section 102 calculates the change-gear ratio operation amount 59 such that the target change-gear ratio 56 and the actual change-gear ratio 57 are approximately equal. The change-gear ratio operation amount calculation section 102 outputs the calculated change-gear ratio operation amount 59 to a target sheave speed calculation section 103. In this embodiment, the change-gear ratio operation amount 59 is a difference between a current change-gear ratio and a change-gear ratio such that the target change-gear ratio 56 and the actual change-gear ratio 57 are substantially equal. In other words, the change-gear ratio operation amount 59 is a magnitude of the change-gear ratio to be varied in order to substantially equalize the target change-gear ratio 56 and the actual change-gear ratio 57 to each other.

The target sheave speed calculation section 103 calculates a target sheave speed 71 according to the inputted change-gear ratio operation amount 59. The target sheave speed calculation section 103 outputs the calculated target sheave speed 71 to a subtraction section 112. The target sheave speed 71 is a moving speed of the primary movable sheave half 21b, which is used to change the change-gear ratio of the change-gear mechanism 20a by the change-gear ratio operation amount 59.

On the other hand, an actual sheave speed calculation section 108, provided in the CPU 7a, calculates an actual sheave speed 72 based on an actual sheave position 68 outputted from the sheave position sensor 40. The actual sheave speed calculation section 108 outputs the calculated actual sheave speed 72 to the subtraction section 112. The actual sheave speed 72 is a current moving speed of the primary movable sheave half 21b.

The subtraction section 112 subtracts the actual sheave speed 72 from the target sheave speed 71 in order to calculate a sheave speed difference 73. The subtraction section 112 outputs the sheave speed difference 73 to a motor drive signal computation section 104.

The motor drive signal computation section 104 computes a PWM signal 60 according to the sheave speed difference 73. The motor drive signal computation section 104 outputs the computed PWM signal 60 to the drive circuit 8. The drive circuit 8 applies a pulse voltage 61 to the electric motor 30 according to the inputted PWM signal 60. Thereby, the primary movable sheave half 21b is driven to change the change-gear ratio of the transmission 20.

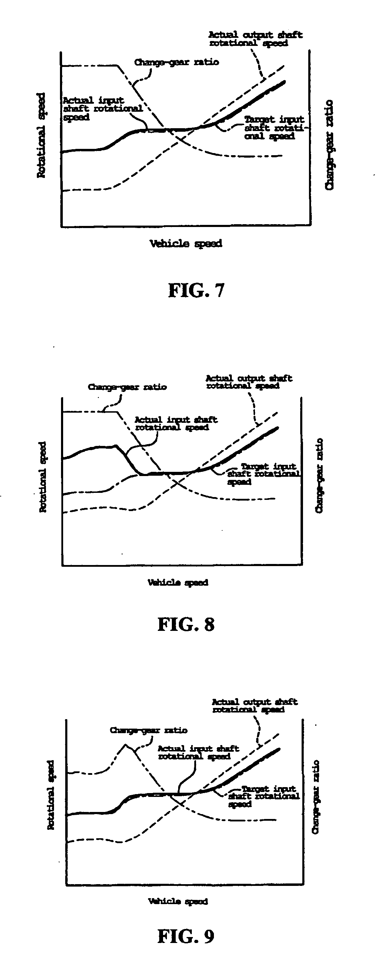

As an example, it is conceivable that the transmission is controlled in a manner described below. The CPU calculates a target change-gear ratio based on the throttle opening, which is outputted from the throttle opening sensor, and the vehicle speed, which is outputted from the vehicle speed sensor. The CPU outputs a PWM signal according to the calculated target change-gear ratio to the drive circuit. The drive circuit applies a pulse voltage to the electric motor according to the PWM signal. In this manner, the transmission is controlled such that the change-gear ratio of the transmission is substantially equalized to the target change-gear ratio, as shown in FIG. 7.

However, in the aforementioned method for controlling the transmission, the target change-gear ratio is determined based on the throttle opening and the vehicle speed. Therefore, as long as the throttle opening and the vehicle speed are the same, the target change-gear ratio remains constant. For example, as can be seen in FIGs. 7 and 8 in which their respective change-gear ratios are substantially equal, the change-gear ratio remains unchanged as long as the throttle opening and the vehicle speed remain the same, even though the centrifugal clutch deteriorates with time and thus becomes more difficult to be engaged.

When the centrifugal clutch deteriorates with time and thus becomes more difficult to be engaged, the engine load at low speeds decreases. Specifically, as the rotational speed, at which the centrifugal clutch is engaged, increases due to the wear of the centrifugal clutch, the load on the engine decreases in a rotational speed range within which the centrifugal clutch cannot be engaged and in a rotational speed range within which the degree of engagement of the centrifugal clutch decreases. Consequently, the actual input shaft rotational speed shown in FIG. 8 is higher than the target input shaft rotational speed obtained in initial use of the transmission. That is, the actual input shaft rotational speed and the engine speed increase.

On the contrary, in this embodiment, as shown in FIG. 5, the target engine speed 52 and the target input shaft rotational speed 53 are determined based on the throttle opening 50, the vehicle speed 51, and the map 70 for determining a target engine speed. The target engine speed 52 and the target input shaft rotational speed 53 are kept constant as long as the throttle opening 50 and the vehicle speed 51 remain the same.

On the other hand, the target change-gear ratio 56 is calculated by dividing the target input shaft rotational speed 53 by the actual output shaft rotational speed 54. The actual output shaft rotational speed 54 varies with conditioned changes, such as deterioration of the centrifugal clutch 25. Thus, the target change-gear ratio 56 varies due to the conditions such as deterioration of the centrifugal clutch 25.

For example, as the centrifugal clutch 25 deteriorates with time, the load on the engine 10, generated by the engagement of the centrifugal clutch 25, decreases. Thus, the actual output shaft rotational speed 54 increases with the engine speed. This results in the smaller target change-gear ratio 56, as shown in FIG. 9. As the target change-gear ratio 56 becomes smaller, the actual output shaft rotational speed 54 becomes higher. This helps the centrifugal clutch 25 to be easily engaged. In addition, due to the smaller target change-gear ratio 56, the load on the engine 10 becomes relatively larger. Therefore, increase in the engine speed is suppressed.

Furthermore, in this embodiment, the motor 30 is controlled such that a difference between the target change-gear ratio 56 and the actual change-gear ratio 57 is reduced. That is, the motor 30 is controlled such that a difference between the target input shaft rotational speed 53 and the actual input shaft rotational speed 55 is reduced. Thus, increase in the engine speed is more securely suppressed. In this embodiment, because the motor 30 is controlled such that the target change-gear ratio 56 and the actual change-gear ratio 57 are approximately equal, increase in the engine speed is particularly suppressed in a secure manner.

As described above, increase in the engine speed can be suppressed by controlling the motor 30 based on the target change-gear ratio 56, which is calculated by dividing the target input shaft rotational speed 53 by the actual output shaft rotational speed 54. The present invention does not specifically limit a control method for controlling the motor 30 based on the target change-gear ratio 56. The control method for controlling the motor 30 based on the target change-gear ratio 56 may be implemented in a specific manner, for example, as shown in the following variations 1 to 4.

The following variations 1 to 4 are described with reference to FIGs. 1 to 4 that are shared in the description of the embodiment of the invention. In addition, a component having substantially the same function as the component described in the embodiment of the invention is illustrated with a common reference numeral, and the description thereof is not repeated.

### First Variation

Variations of the embodiment of the invention will be hereinafter described. In the description of the following variations, a component having substantially the same function as the component described in the embodiment of the invention is illustrated with a common reference numeral, and the description thereof is not repeated.

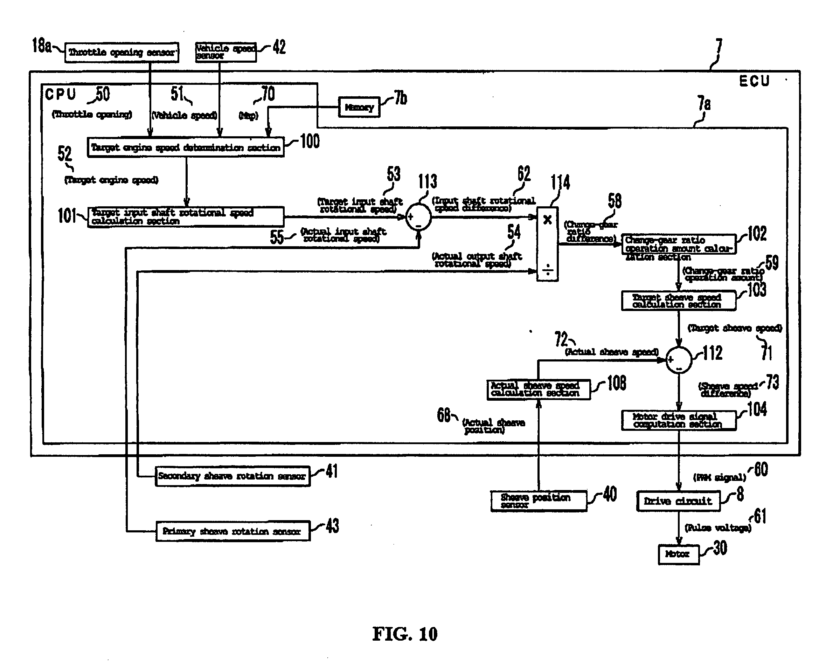

In the above embodiment of the invention, as shown in FIG. 5, an example is described in which the change-gear ratio difference 58 is calculated by subtracting the actual change-gear ratio 57 from the target change-gear ratio 56. However, the change-gear ratio difference 58 may be calculated in a manner shown in FIG. 10.

Specifically, in the first variation of the embodiment of the invention, the subtraction section 113 subtracts the actual input shaft rotational speed 55 from the target input shaft rotational speed 53 outputted from the target input shaft rotational speed calculation section 101, in order to calculate an input shaft rotational speed difference 62. The subtraction section 113 outputs the calculated input shaft rotational speed difference 62 to a division section 114. The division section 114 divides the inputted input shaft rotational speed difference 62, which is inputted to the division section 114, by the actual output shaft rotational speed 54 in order to calculate the change-gear ratio difference 58. The calculated change-gear ratio difference 58 is outputted to the change-gear ratio operation amount calculation section 102, as described above in the embodiment of the invention.

### Second Variation

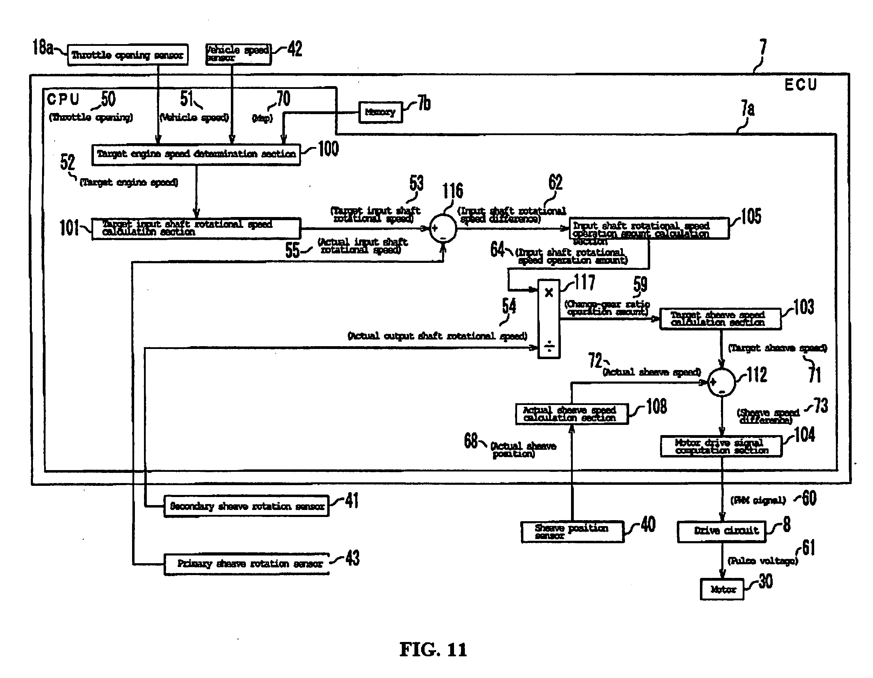

In the embodiment of the invention and the first variation thereof, an example is described in which the change-gear ratio operation amount 59 is calculated based on the change-gear ratio difference 58. However, the present invention is not limited to the aforementioned calculation method. The change-gear ratio operation amount 59 may be calculated, for example, as shown in FIG. 11.

Specifically, in the second variation of the embodiment of the invention, the subtraction section 116 subtracts the actual input shaft rotational speed 55 from the target input shaft rotational speed 53 outputted from the target input shaft rotational speed calculation section 101, in order to calculate the input shaft rotational speed difference 62. The subtraction section 116 outputs the input shaft rotational speed difference 62 to the input shaft rotational speed operation amount calculation section 105. The input shaft rotational speed operation amount calculation section 105 calculates the input shaft rotational speed operation amount 64 according to the input shaft rotational speed difference 62. The input shaft rotational speed operation amount calculation section 105 outputs the calculated input shaft rotational speed operation amount 64 to a division section 117. The input shaft rotational speed operation amount 64 is an amount to manipulate the rotational speed of the input shaft 21d that is necessary to reduce a difference between the target change-gear ratio 56 and the actual change-gear ratio 57. In other words, the input shaft rotational speed operation amount 64 is designed to manipulate or vary the rotational speed of the input shaft 21d by the input shaft rotational speed operation amount 64. Thereby, the difference between the target input shaft rotational speed 53 and the actual input shaft rotational speed 55 is reduced. This results in a reduction in the difference between the target change-gear ratio 56 and the actual change-gear ratio 57.

The division section 117 divides the input shaft rotational speed operation amount 64 by the actual output shaft rotational speed 54 in order to calculate the change-gear ratio operation amount 59. The calculated change-gear ratio operation amount 59 is outputted to the target sheave speed calculation section 103.

### Third Variation

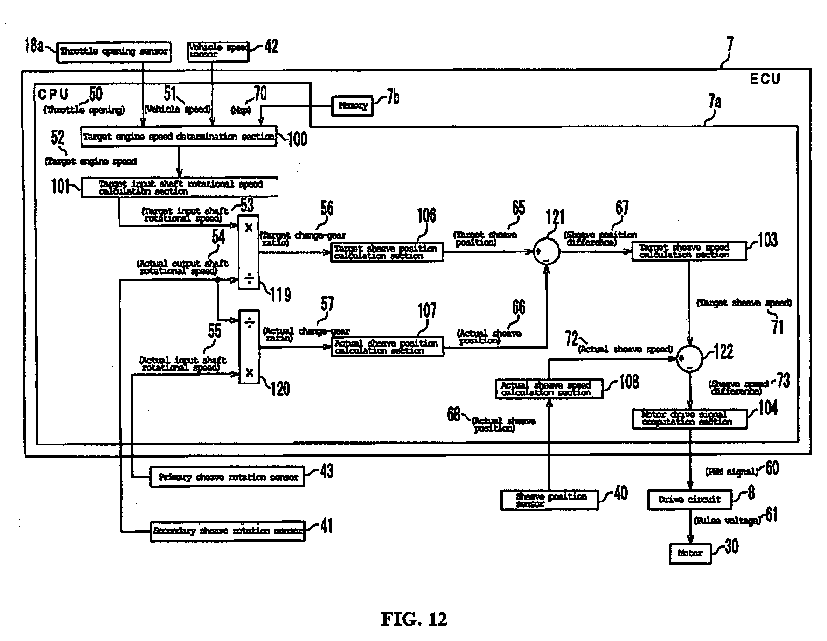

In the third variation of the embodiment of the invention, an example is described with reference to FIG. 12 in which the motor 30 is controlled by calculating the sheave speed difference 73 based on the sheave position (I) of the primary movable sheave half 21b.

As shown in FIG. 12, in the third variation of the embodiment of the invention, a division section 119 divides the target input shaft rotational speed 53, which is outputted from the target input shaft rotational speed calculation section 101, by the actual output shaft rotational speed 54 in order to calculate the target change-gear ratio 56. The division section 119 outputs the calculated target change-gear ratio 56 to a target sheave position calculation section 106. The target sheave position calculation section 106 calculates a target sheave position 65 according to the target change-gear ratio 56. The target sheave position calculation section 106 outputs the calculated target sheave position 65 to a subtraction section 121. The target sheave position 65 is a sheave position (I) of the primary movable sheave half 21b when the change-gear ratio of the transmission 20 reaches the target change-gear ratio 56.

On the other hand, the division section 120 divides the actual input shaft rotational speed 55 by the actual output shaft rotational speed 54 in order to calculate the actual change-gear ratio 57. The division section 120 outputs the calculated actual change-gear ratio 57 to an actual sheave position calculation section 107. The actual sheave position calculation section 107 calculates an actual sheave position 66 according to the actual change-gear ratio 57. The actual sheave position calculation section 107 outputs the calculated actual sheave position 66 to the subtraction section 121. The actual sheave position 66 is a sheave position (I) of the primary movable sheave half 21b when the change-gear ratio of the transmission 20 is the actual change-gear ratio 57.

The subtraction section 121 subtracts the actual sheave position 66 from the target sheave position 65 in order to calculate a sheave position difference 67. The subtraction section 121 outputs the calculated sheave position difference 67 to the target sheave speed calculation section 103.

The target sheave speed calculation section 103 calculates the target sheave speed 71 based on the inputted shave position difference 67. The target sheave speed calculation section 103 outputs the calculated target sheave speed 71 to a subtraction section 122.

The subtraction section 122 subtracts the actual sheave speed 72 from the target sheave speed 71 in order to calculate the sheave speed difference 73. The subtraction section 122 outputs the calculated sheave speed difference 73 to the motor drive signal computation section 104. Then, the motor drive signal computation section 104 computes the PWM signal 60, as described in the embodiment of the invention.

### Fourth Variation

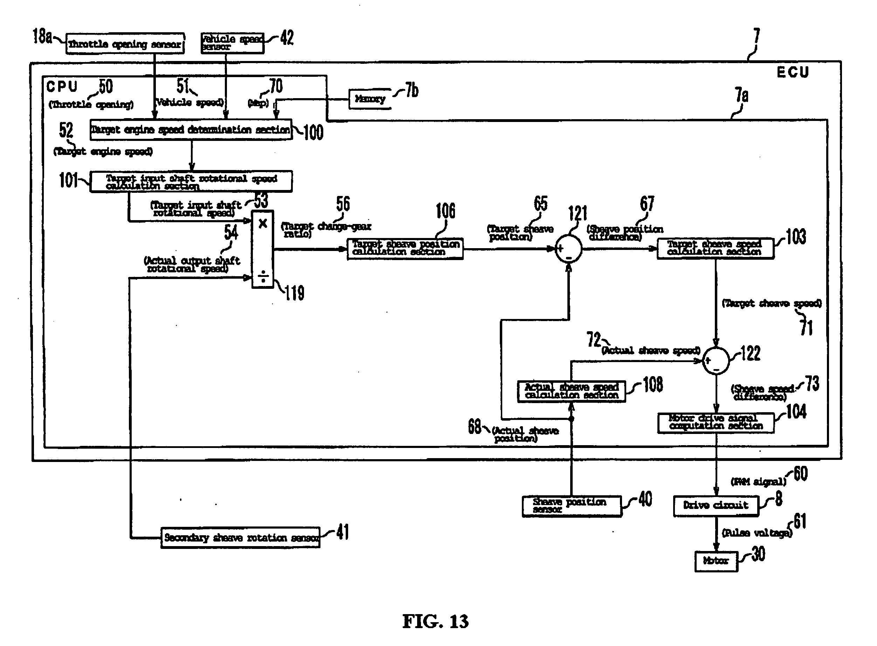

The fourth variation of the embodiment shown in FIG. 13 is a further variation of the third variation. In the third variation, an example is described in which the subtraction section 121 subtracts the actual sheave position 66, which is calculated based on the actual output shaft rotational speed 54 and the actual input shaft rotational speed 55, from the target sheave position 65 outputted from the target sheave position calculation section 106. However, the method of calculating the actual sheave position 66 is not limited to the previous method. For example, as described in the fourth variation of the embodiment, the subtraction section 121 may subtract the actual sheave position 68, which is detected by the sheave position sensor 40, from the target sheave position 65 outputted from the target sheave position calculation section 106.

### Other Variations

The primary sheave 21 may not necessarily be mounted to the crankshaft 11. For example, the primary sheave 21 may be mounted to another rotational shaft that meshes with the crankshaft 11 and rotates together with the crankshaft 11.

The secondary sheave 22 may not necessarily be mounted to the secondary sheave shaft 27. The secondary sheave 22 may be mounted to another rotational shaft that meshes with the secondary sheave shaft 27 and rotates together with the secondary sheave shaft 27.

The change-gear mechanism 20a is not limited to a belt-type ECVT. For example, the change-gear mechanism 20a may be a toroidal type ECVT.

The motor 30 is not limited to a PWM-controlled motor. For example, the motor 30 may be a pulse amplitude modulation (PAM)-controlled motor. Alternatively, the motor 30 may be a stepping motor.

In the above embodiment of the invention, an example is described in which the primary movable sheave half 21b is driven by the motor 30. However, the secondary movable sheave half 22b may be driven by the motor 30.

In the embodiment of the invention, an example is described in which the target engine speed 52 is determined based on the throttle opening 50, the vehicle speed 51, and the map 70 for determining a target engine speed. However, the present invention does not specifically limit the method for determining the target engine speed 52.

In the specification of the invention, the term "two-wheeled motorized vehicle" refers to so-called two-wheeled motorized vehicles in a broad sense. That is, in the present invention, the two-wheeled motorized vehicle includes not only motorcycles in a narrow sense but also scooters and so-called mopeds, for example.

The term "driving source" refers to what produces power. The "driving source" may be an internal combustion engine, an electric motor, or the like.

The term "be connected" means both directly and indirectly connected via other members.

The present invention is useful for a transmission, a vehicle having the transmission, such as two-wheeled motorized vehicle, and so forth.

### Description of Reference Numerals

1: two-wheeled motorized vehicle
2: power unit
7: ECU
7a: CPU (computing unit)
7b: memory
8: drive circuit (drive unit)
9: control unit
10: engine
18a: throttle opening sensor
20: transmission
20a: change-gear mechanism
21: primary sheave
21a: primary fixed sheave half
21b: primary movable sheave half
21c: belt groove (first belt groove)
21d: input shaft
22: secondary sheave
22a: secondary fixed sheave half
22b: secondary movable sheave half
22c: belt groove (second belt groove)
22d: output shaft
23: V-belt
25: centrifugal clutch
25a: centrifugal plate
25b: centrifugal weight
25c: clutch housing
27: secondary sheave shaft
30: motor (actuator)
40: sheave position sensor
41: secondary shave rotation sensor (output shaft rotational speed sensor)
42: vehicle speed sensor
43: primary sheave rotation sensor (input shaft rotational speed sensor)
50: throttle opening

## Claims

1. An electronically-controlled continuously variable transmission (20) comprising:
a change-gear mechanism (20a) having an input shaft (21b), an output shaft (22d), and an actuator (30) for changing a change-gear ratio between the input shaft (21d) and the output shaft (22d);
a control unit (9) for controlling the actuator (30);
an output shaft rotational speed sensor (41) for detecting a rotational speed of the output shaft (22d) and outputting the rotational speed of the output shaft (22d) to the control unit (9); and
a centrifugal clutch (25) connected to the output shaft (22d), the centrifugal clutch (25) being configured to transmit rotation of the output shaft (22d) to a drive wheel or rear wheel (3);
wherein the control unit (9) is adapted to control the actuator (30) based on a target change-gear ratio obtained by dividing a target rotational speed of the input shaft (21d) by the rotational speed of the output shaft (22d) such that the target change-gear ratio varies with deterioration of the centrifugal clutch (25).

2. The transmission (20) according to Claim 1, further comprising an input shaft rotational speed sensor (43) for detecting a rotational speed of the input shaft (21d) and outputting the rotational speed of the input shaft (21d) to the control unit (9), wherein the control unit (9) is adapted to control the actuator (30) such that a difference is reduced between the target change-gear ratio and an actual change-gear ratio obtained by dividing the rotational speed of the input shaft (21d) by the rotational speed of the output shaft (22d).

3. The transmission (20) according to Claim 2, wherein the control unit (9) is adapted to control the actuator (30) such that the actual change-gear ratio and the target change-gear ratio are approximately equal.

4. The transmission (20) according to Claim 1, 2 or 3, wherein the change-gear mechanism (20a) further comprises:
a primary sheave (21) including a primary fixed sheave half (21a) fixed relative to the input shaft (21d), and a primary movable sheave half (21b) opposed to the primary fixed sheave half (21a) in a displaceable manner in an axial direction of the input shaft (21d) and forming a first belt groove (21c) with the primary fixed sheave half (21a);
a secondary sheave (22) including a secondary fixed sheave half (22a) fixed relative to the output shaft (22d), and a secondary movable sheave half (22b) opposed to the secondary fixed sheave half (22a) in a displaceable manner in an axial direction of the output shaft (22d) and forming a second belt groove (22c) with the secondary fixed sheave half (22a); and
a belt wound (23) onto the first belt groove (21c) and the second belt groove (22c),
wherein the actuator (30) is adapted to displace the primary movable sheave half (21b) or the secondary movable sheave half (22b).

5. The transmission (20) according to Claim 2, wherein the control unit (9) comprises:
a computing unit (7a) for computing a operation amount of the change-gear ratio based on the difference between the actual change-gear ratio and the target change-gear ratio in order to reduce the difference between the actual change-gear ratio and the target change-gear ratio, and for outputting a control signal according to the computed operation amount of the change-gear ratio; and
a drive unit (8) for supplying electric power to the actuator (30) according to the control signal.

6. The transmission (20) according to Claim 5, wherein the computing unit (7a) is adapted to compute the operation amount of the change-gear ratio by obtaining a operation amount of the rotational speed of the input shaft (21d) based on a difference between the rotational speed of the input shaft (21d) and a target rotational speed of the input shaft (21d) in order to reduce the difference between the actual change-gear ratio and the target change-gear ratio, and by dividing the computed operation amount of the rotational speed of the input shaft (21d) by the rotational speed of the output shaft (22d).

7. The transmission (20) according to Claim 4, further comprising an input shaft rotational speed sensor (43) for detecting a rotational speed of the input shaft (21d) and outputting the rotational speed of the input shaft (21d) to the control unit (9), wherein the control unit (9) comprises:
a computing unit (7a) for computing a operation amount of a sheave position based on a difference between an actual sheave position of either one of the primary movable sheave half (21b) and the secondary movable sheave half (22b), which is calculated based on the actual change-gear ratio obtained by dividing the rotational speed of the input shaft (21d) by the rotational speed of the output shaft (22d), and a target sheave position of either one of the primary movable sheave half (21b) and the secondary movable sheave half (22b), which is calculated based on the target change-gear ratio, in order to reduce the difference between the actual change-gear ratio and the target change-gear ratio, and for outputting a control signal according to the computed operation amount of the sheave position; and
a drive unit (8) for supplying electric power to the actuator (30) according to the control signal.

8. The transmission (20) according to Claim 4, wherein the control unit (9) is adapted to compute a target sheave position of either one of the primary movable sheave half (21b) and the secondary movable sheave half (22b) based on the target change-gear ratio, and control the actuator (30) such that the sheave position of either one of the primary movable sheave half (21b) and the secondary movable sheave half (22b) reaches the target sheave position.

9. A power unit (2) comprising an electronically-controlled continuously variable transmission (20) according to any preceding Claim.

10. A vehicle (1) comprising a rear wheel or drive wheel (3) and a power unit (2) having a driving source (10) and an electronically-controlled continuously variable transmission (20), wherein the electronically-controlled continuously variable transmission (20) comprises:
a change-gear mechanism (20a) having an input shaft (21d) connected to the driving source (10), an output shaft (22d), and an actuator (30) for changing a change-gear ratio between the input shaft (21d) and the output shaft (22d);
a control unit (9) for controlling the actuator (30);
an output shaft rotational speed sensor (41) for detecting a rotational speed of the output shaft (22d) and outputting the rotational speed of the output shaft (22d) to the control unit (9); and
a centrifugal clutch (25) connected to the output shaft (22d), the centrifugal clutch (25) being configured to transmit rotation of the output shaft (22d) to the drive wheel or rear wheel (3); wherein
the control unit (9) is adapted to control the actuator (30) according to a target change-gear ratio obtained by dividing a target rotational speed of the input shaft (21d) by the rotational speed of the output shaft (22d) such that the target change-gear ratio varies with deterioration of the centrifugal clutch (25).

11. The vehicle (1) according to Claim 10, further comprising:
a throttle opening sensor (18a) for detecting a throttle opening; and
a vehicle speed sensor (42) for detecting a vehicle speed, wherein the control unit (9) determines the target rotational speed of the input shaft (21d) based on the throttle opening and the vehicle speed.

12. A controller for an electronically-controlled continuously variable transmission (20) comprising:
a change-gear mechanism (20a) having an input shaft (21d), an output shaft (22d), and an actuator (30) for changing a change-gear ratio between the input shaft (21d) and the output shaft (22d);
a control unit (9) for controlling the actuator (30);
an output shaft rotational speed sensor (41) for detecting a rotational speed of the output shaft (22d); and
a centrifugal clutch (25) connected to an output shaft (22d), the centrifugal clutch (25) being configured to transmit rotation of the output shaft (22d) to a drive wheel or rear wheel (3);
wherein the actuator (30) is controlled according to a target change-gear ratio obtained by dividing a target rotational speed of the input shaft (21d) by the rotational speed of the output shaft (22d) such that the target change-gear ratio varies with deterioration of the centrifugal clutch (25).

13. A method for controlling an electronically-controlled continuously variable transmission (20) having:
a change-gear mechanism (20a) having an input shaft (21d), an output shaft (22d), and an actuator (30) for changing a change-gear ratio between the input shaft (21d) and the output shaft (22d);
a control unit (9) for controlling the actuator (30); and
an output shaft rotational speed sensor (41) for detecting a rotational speed of the output shaft (22d), and
a centrifugal clutch (25) connected to the output shaft (22d), the centrifugal clutch (25) being configured to transmit rotation of the output shaft (22d) to a drive wheel or rear wheel (3); wherein
the method comprises the steps of:
determining a target change-gear ratio obtained by dividing a target rotational speed of the input shaft (21d) by the rotational speed of the output shaft (22d); and
controlling the actuator (30) according to the determined change-gear ratio such that the target change-gear ratio varies with deterioration of the centrifugal clutch (25).

## Patentansprüche

1. Elektronisch geregeltes, stufenlos verstellbares Getriebe (20), das aufweist:
einen Wechselradmechanismus (20a) mit einer Antriebswelle (21d), einer Abtriebswelle (22d) und einem Stellglied (30) für das Verändern eines Wechselradverhältnisses zwischen der Antriebswelle (21d) und der Abtriebswelle (22d);
ein Steuergerät (9) für das Steuern des Stellgliedes (30);
einen Abtriebswellendrehzahlsensor (41) für das Ermitteln einer Drehzahl der Abtriebswelle (22d) und das Ausgeben der Drehzahl der Abtriebswelle (22d) an das Steuergerät (9); und
eine Fliehkraftkupplung (25), die mit der Abtriebswelle (22d) verbunden ist, wobei die Fliehkraftkupplung (25) ausgebildet ist, um die Drehung der Abtriebswelle (22d) auf ein Antriebsrad oder Hinterrad (3) zu übertragen;
wobei das Steuergerät (9) ausgebildet ist, um das Stellglied (30) auf der Basis eines Zielwechselradverhältnisses zu steuern, das durch Dividieren einer Zieldrehzahl der Antriebswelle (21d) durch die Drehzahl der Abtriebswelle (22d) erhalten wird, so dass das Zielwechselradverhältnis mit dem Verschleiß der Fliehkraftkupplung (25) variiert.

2. Getriebe (20) nach Anspruch 1, das außerdem einen Antriebswellendrehzahlsensor (43) für das Ermitteln einer Drehzahl der Antriebswelle (21d) und das Ausgeben der Drehzahl der Antriebswelle (21d) an das Steuergerät (9) aufweist, wobei das Steuergerät (9) ausgebildet ist, um das Stellglied (30) so zu steuern, dass eine Differenz zwischen dem Zielwechselradverhältnis und einem tatsächlichen Wechselradverhältnis reduziert wird, das durch Dividieren der Drehzahl der Antriebswelle (21d) durch die Drehzahl der Abtriebswelle (22d) erhalten wird.

3. Getriebe (20) nach Anspruch 2, bei dem das Steuergerät (9) ausgebildet ist, um das Stellglied (30) so zu steuern, dass das tatsächliche Wechselradverhältnis und das Zielwechselradverhältnis annähernd gleich sind.

4. Getriebe (20) nach Anspruch 1, 2 oder 3, bei dem der Wechselradmechanismus (20a) außerdem aufweist:
eine primäre Rillenscheibe (21), die eine primäre stationäre Rillenscheibenhälfte (21a), die relativ zur Antriebwelle (21d) stationär ist, und eine primäre bewegliche Rillenscheibenhälfte (21b) umfasst, die der primären stationären Rillenscheibenhälfte (21a) in einer verschiebbaren Weise in einer axialen Richtung der Antriebswelle (21d) gegenüberliegend angeordnet ist und eine erste Riemenrille (21c) mit der primären stationären Rillenscheibenhälfte (21a) bildet;
eine sekundäre Rillenscheibe (22), die eine sekundäre stationäre Rillenscheibenhälfte (22a), die relativ zur Abtriebwelle (22d) stationär ist, und eine sekundäre bewegliche Rillenscheibenhälfte (22b) umfasst, die der sekundären stationären Rillenscheibenhälfte (22a) in einer verschiebbaren Weise in einer axialen Richtung der Abtriebswelle (22d) gegenüberliegend angeordnet ist und eine zweite Riemenrille (22c) mit der sekundären stationären Rillenscheibenhälfte (22a) bildet; und
einen Riemen (23), der in die erste Riemenrille (21c) und die zweite Riemenrille (22c) gewickelt ist,
wobei das Stellglied (30) ausgebildet ist, um die primäre bewegliche Rillenscheibenhälfte (21b) oder die sekundäre bewegliche Rillenscheibenhälfte (22b) zu verschieben.

5. Getriebe (20) nach Anspruch 2, bei dem das Steuergerät (9) aufweist:
eine Rechenanlage (7a) für das Berechnen einer Arbeitsgröße des Wechselradverhältnisses auf der Basis der Differenz zwischen dem tatsächlichen Wechselradverhältnis und dem Zielwechselradverhältnis, um die Differenz zwischen dem tatsächlichen Wechselradverhältnis und dem Zielwechselradverhältnis zu reduzieren, und für das Ausgeben eines Steuersignals entsprechend der berechneten Arbeitsgröße des Wechselradverhältnisses; und
eine Antriebsanlage (8) für das Zuführen von elektrischer Leistung zum Stellglied (30) entsprechend dem Steuersignal.

6. Getriebe (20) nach Anspruch 5, bei dem die Rechenanlage (7a) ausgebildet ist, um die Arbeitsgröße des Wechselradverhältnisses zu berechnen, indem eine Arbeitsgröße der Drehzahl der Antriebswelle (21d) basierend auf einer Differenz zwischen der Drehzahl der Antriebswelle (21d) und einer Zieldrehzahl der Antriebswelle (21d) erhalten wird, um die Differenz zwischen dem tatsächlichen Wechselradverhältnis und dem Zielwechselradverhältnis zu reduzieren, und indem die berechnete Arbeitsgröße der Drehzahl der Antriebswelle (21d) durch die Drehzahl der Abtriebswelle (22d) dividiert wird.

7. Getriebe (20) nach Anspruch 4, das außerdem einen Antriebswellendrehzahlsensor (43) für das Ermitteln einer Drehzahl der Antriebswelle (21d) und das Ausgeben der Drehzahl der Antriebswelle (21d) an das Steuergerät (9) aufweist, wobei das Steuergerät (9) aufweist:
eine Rechenanlage (7a) für das Berechnen einer Arbeitsgröße einer Rillenscheibenposition auf der Basis einer Differenz zwischen einer tatsächlichen Rillenscheibenposition von einer der beiden von primärer beweglicher Rillenscheibenhälfte (21b) und sekundärer beweglicher Rillenscheibenhälfte (22b), die basierend auf dem tatsächlichen Wechselradverhältnis berechnet wird, das durch Dividieren der Drehzahl der Antriebswelle (21d) durch die Drehzahl der Abtriebswelle (22d) erhalten wird, und einer Zielrillenscheibenposition von einer der beiden von primärer beweglicher Rillenscheibenhälfte (21b) und sekundärer beweglicher Rillenscheibenhälfte (22b), die basierend auf dem Zielwechselradverhältnis berechnet wird, um die Differenz zwischen dem tatsächlichen Wechselradverhältnis und dem Zielwechselradverhältnis zu reduzieren, und für das Ausgeben eines Steuersignals entsprechend der berechneten Arbeitsgröße der Rillenscheibenposition; und
eine Antriebsanlage (8) für das Zuführen von elektrischer Leistung zum Stellglied (30) entsprechend dem Steuersignal.

8. Getriebe (20) nach Anspruch 4, bei dem das Steuergerät (9) ausgebildet ist, um eine Zielrillenscheibenposition von einer der beiden von primärer beweglicher Rillenscheibenhälfte (21b) und sekundärer beweglicher Rillenscheibenhälfte (22b) auf der Basis des Zielwechselradverhältnisses zu berechnen, und um das Stellglied (30) so zu steuern, dass die Rillenscheibenposition von einer der beiden von primärer beweglicher Rillenscheibenhälfte (21b) und sekundärer beweglicher Rillenscheibenhälfte (22b) die Zielrillenscheibenposition erreicht.

9. Leistungseinheit (2), die ein elektronisch geregeltes, stufenlos verstellbares Getriebe (20) nach einem der vorhergehenden Ansprüche aufweist.

10. Fahrzeug (1), das ein Hinterrad oder Antriebsrad (3) und eine Leistungseinheit (2) mit einer Antriebsquelle (10) und ein elektronisch geregeltes, stufenlos verstellbares Getriebe (20) aufweist, wobei das elektronisch geregelte, stufenlos verstellbare Getriebe (20) aufweist:
einen Wechselradmechanismus (20a) mit einer Antriebswelle (21d), die mit der Antriebsquelle (10) verbunden ist, einer Abtriebswelle (22d) und einem Stellglied (30) für das Verändern eines Wechselradverhältnisses zwischen der Antriebswelle (21d) und der Abtriebswelle (22d);
ein Steuergerät (9) für das Steuern des Stellgliedes (30);
einen Abtriebswellendrehzahlsensor (41) für das Ermitteln einer Drehzahl der Abtriebswelle (22d) und das Ausgeben der Drehzahl der Abtriebswelle (22d) an das Steuergerät (9); und
eine Fliehkraftkupplung (25), die mit der Abtriebswelle (22d) verbunden ist, wobei die Fliehkraftkupplung (25) ausgebildet ist, um die Drehung der Abtriebswelle (22d) auf das Antriebsrad oder Hinterrad (3) zu übertragen;
wobei das Steuergerät (9) ausgebildet ist, um das Stellglied (30) entsprechend einem Zielwechselradverhältnis zu steuern, das durch Dividieren einer Zieldrehzahl der Antriebswelle (21d) durch die Drehzahl der Abtriebswelle (22d) erhalten wird, so dass das Zielwechselradverhältnis mit dem Verschleiß der Fliehkraftkupplung (25) variiert.

11. Fahrzeug (1) nach Anspruch 10, das außerdem aufweist:
einen Drosselöffnungssensor (18a) für das Ermitteln einer Drosselöffnung; und
einen Fahrzeuggeschwindigkeitssensor (42) für das Ermitteln einer Fahrzeuggeschwindigkeit, wobei das Steuergerät (9) die Zieldrehzahl der Antriebswelle (21d) auf der Basis der Drosselöffnung und der Fahrzeuggeschwindigkeit ermittelt.

12. Regler für ein elektronisch geregeltes, stufenlos verstellbares Getriebe (20), das aufweist:
einen Wechselradmechanismus (20a) mit einer Antriebswelle (21d), einer Abtriebswelle (22d) und einem Stellglied (30) für das Verändern eines Wechselradverhältnisses zwischen der Antriebswelle (21d) und der Abtriebswelle (22d);
ein Steuergerät (9) für das Steuern des Stellgliedes (30);
einen Abtriebswellendrehzahlsensor (41) für das Ermitteln einer Drehzahl der Abtriebswelle (22d); und
eine Fliehkraftkupplung (25), die mit einer Abtriebswelle (22d) verbunden ist, wobei die Fliehkraftkupplung (25) ausgebildet ist, um die Drehung der Abtriebswelle (22d) auf ein Antriebsrad oder Hinterrad (3) zu übertragen;
wobei das Stellglied (30) entsprechend einem Zielwechselradverhältnis gesteuert wird, das durch Dividieren einer Zieldrehzahl der Antriebswelle (21d) durch die Drehzahl der Abtriebswelle (22d) erhalten wird, so dass das Zielwechselradverhältnis mit dem Verschleiß der Fliehkraftkupplung (25) variiert.

13. Verfahren zum Steuern eines elektronisch geregelten, stufenlos verstellbaren Getriebes (20), das aufweist:
einen Wechselradmechanismus (20a) mit einer Antriebswelle (21d), einer Abtriebswelle (22d) und einem Stellglied (30) für das Verändern eines Wechselradverhältnisses zwischen der Antriebswelle (21d) und der Abtriebswelle (22d);
ein Steuergerät (9) für das Steuern des Stellgliedes (30); und
einen Abtriebswellendrehzahlsensor (41) für das Ermitteln einer Drehzahl der Abtriebswelle (22d); und
eine Fliehkraftkupplung (25), die mit einer Abtriebswelle (22d) verbunden ist, wobei die Fliehkraftkupplung (25) ausgebildet ist, um die Drehung der Abtriebswelle (22d) auf ein Antriebsrad oder Hinterrad (3) zu übertragen; wobei
das Verfahren die folgenden Schritte aufweist:
Ermitteln eines Zielwechselradverhältnisses, das durch Dividieren einer Zieldrehzahl der Antriebswelle (21d) durch die Drehzahl der Abtriebswelle (22d) erhalten wird; und
Steuern des Stellgliedes (30) entsprechend dem ermittelten Wechselradverhältnis, so dass das Zielwechselradverhältnis mit dem Verschleiß der Fliehkraftkupplung (25) variiert.

## Revendications

1. Transmission à variation continue à commande électronique (20), comprenant :
un mécanisme de changement de vitesses (20a), comportant un arbre d'entrée (21b), un arbre de sortie (22d) et un actionneur (30) pour changer un rapport de changement de vitesses entre l'arbre d'entrée (21d) et l'arbre de sortie (22d) ;
une unité de commande (9) pour contrôler l'actionneur (30) ;
un capteur de la vitesse de rotation de l'arbre de sortie (41), pour détecter une vitesse de rotation de l'arbre de sortie (22b) et transmettre la vitesse de rotation de l'arbre de sortie (22d) à l'unité de commande (9) ; et
un embrayage centrifuge (25), connecté à l'arbre de sortie (22d), l'embrayage centrifuge (25) étant configuré de sorte à transmettre la rotation de l'arbre de sortie (22d) à une roue motrice ou à une roue arrière (3) ;
l'unité de commande (9) étant adaptée pour contrôler l'actionneur (30) sur la base d'un rapport de changement de vitesses cible établi en divisant une vitesse de rotation cible de l'arbre d'entrée (21d) par la vitesse de rotation de l'arbre de sortie (22d), de sorte que le rapport de changement de vitesses cible change en fonction d'une détérioration de l'embrayage centrifuge (25).

2. Transmission (20) selon la revendication 1, comprenant en outre un capteur de la vitesse de rotation de l'arbre d'entrée (43), pour détecter une vitesse de rotation de l'arbre d'entrée (21d) et transmettre la vitesse de rotation de l'arbre d'entrée (21d) à l'unité de commande (9), l'unité de commande (9) étant adaptée pour contrôler l'actionneur (30) de sorte à réduire une différence entre le rapport de changement de vitesses cible et un rapport de changement de vitesses effectif établi en divisant la vitesse de rotation de l'arbre d'entrée (21d) par la vitesse de rotation de l'arbre de sortie (22d).

3. Transmission (20) selon la revendication 2, dans laquelle l'unité de commande (9) est adaptée pour contrôler l'actionneur (30) de sorte que le rapport de changement de vitesses effectif et le rapport de changement de vitesses cible sont pratiquement égaux.

4. Transmission (20) selon les revendications 1, 2 ou 3, dans laquelle le mécanisme de changement de vitesses (20a) comprend en outre :
une poulie primaire (21), englobant une moitié de poulie primaire fixe (21a), fixée sur l'arbre d'entrée (21d), et une moitié de poulie primaire mobile (21b), opposée à la moitié de poulie primaire fixe (21a) et pouvant se déplacer dans une direction axiale par rapport à l'arbre d'entrée (21d), et formant une première gorge de courroie (21c) avec la moitié de poulie primaire fixe (21a) ;
une poulie secondaire (22), englobant un moitié de poulie secondaire fixe (22a) fixée sur l'arbre de sortie (22d), et une moitié de poulie secondaire mobile (22b) opposée à la moitié de poulie secondaire fixe (22a) et pouvant se déplacer dans une direction axiale par rapport à l'arbre de sortie (22d), et formant une deuxième gorge de courroie (22c) avec la moitié de poulie secondaire fixe (22a) ; et
une courroie enroulée (23) sur la première gorge de courroie (21c) et la deuxième gorge de courroie (22c) ;
l'actionneur (30) étant adapté pour déplacer la moitié de poulie primaire mobile (21b) ou la moitié de poulie secondaire mobile (22b).

5. Transmission (20) selon la revendication 2, dans laquelle l'unité de commande (9) comprend :
une unité de calcul (7a), pour calculer une valeur opérationnelle du rapport de changement de vitesses sur la base de la différence entre le rapport de changement de vitesses effectif et le rapport de changement de vitesses cible, en vue de réduire la différence entre le rapport de changement de vitesses effectif et le rapport de changement de vitesses cible, et de transmettre un signal de commande en fonction de la valeur opérationnelle calculée du rapport de changement de vitesses ; et
une unité d'entraînement (8) pour alimenter l'actionneur (30) en énergie électrique en fonction du signal de commande.

6. Transmission (20) selon la revendication 5, dans laquelle l'unité de calcul (7a) est adaptée pour calculer la valeur opérationnelle du rapport de changement de vitesses en établissant une valeur opérationnelle de la vitesse de rotation de l'arbre d'entrée (21d), sur la base d'une différence entre la vitesse de rotation de l'arbre d'entrée (21d) et une vitesse de rotation cible de l'arbre d'entrée (21d), en vue de réduire la différence entre le rapport de changement de vitesses effectif et la rapport de changement de vitesses cible, et en divisant la valeur opérationnelle calculée de la vitesse de rotation de l'arbre d'entrée (21d) par la vitesse de rotation de l'arbre de sortie (22d).

7. Transmission (20) selon la revendication 4, comprenant en outre un capteur de la vitesse de rotation de l'arbre d'entrée (43), pour détecter une vitesse de rotation de l'arbre d'entrée (21d) et transmettre la vitesse de rotation de l'arbre d'entrée (21d) à l'unité de commande (9), l'unité de commande (9) comprenant :
une unité de calcul (7a), pour calculer une valeur opérationnelle d'une position de poulie sur la base d'une différence entre une position effective de la poulie de l'une des moitiés de poulie primaire mobile (21b) et de poulie secondaire mobile (22b), calculée sur la base du rapport de changement de vitesses effectif établi en divisant la vitesse de rotation de l'arbre d'entrée (21d) par la vitesse de rotation de l'arbre de sortie (22d), et une position de poulie cible de l'une des moitiés de poulie primaire mobile (21b) et de poulie secondaire mobile (22b), calculée sur la base du rapport de changement de vitesses cible, en vue de réduire la différence entre le rapport de changement de vitesses effectif et le rapport de changement de vitesses cible, et de transmettre un signal de commande en fonction de la valeur opérationnelle calculée de la position de poulie ; et
une unité d'entraînement (8) pour alimenter l'actionneur (30) en énergie électrique en fonction du signal de commande.

8. Transmission (20) selon la revendication 4, dans laquelle l'unité de commande (9) est adaptée pour calculer une position de poulie cible de l'une des moitiés de poulie primaire mobile (21b) et de poulie secondaire mobile (22b), sur la base du rapport de changement de vitesses cible, et pour contrôler l'actionneur (30) de sorte que la position de poulie de l'une des moitiés de poulie primaire mobile (21b) et de poulie secondaire mobile (22b) atteint la position de poulie cible.

9. Unité de puissance (2), comprenant une transmission à variation continue à commande électronique (20) selon l'une quelconque des revendications précédentes.

10. Véhicule (1), comprenant une roue arrière ou une roue motrice (3), et une unité de puissance (2) comportant une source d'entraînement (10) et une transmission à variation continue à commande électronique (20), dans lequel la transmission à variation continue à commande électronique (20) comprend :
un mécanisme de changement de vitesses (20a), comportant un arbre d'entrée (21d) connecté à la source d'entraînement (10), un arbre de sortie (22d) et un actionneur (30) pour changer un rapport de changement de vitesses entre l'arbre d'entrée (21d) et l'arbre de sortie (22d) ;
une unité de commande (9) pour contrôler l'actionneur (30) ;
un capteur de la vitesse de rotation de l'arbre de sortie (41), pour détecter une vitesse de rotation de l'arbre de sortie (22d) et transmettre la vitesse de rotation de l'arbre de sortie (22d) à l'unité de commande (9) ; et
un embrayage centrifuge (25), connecté à l'arbre de sortie (22d), l'embrayage centrifuge (25) étant configuré de sorte à transmettre la rotation de l'arbre de sortie (22d) à la roue motrice ou à la roue arrière (3) ; dans lequel
l'unité de commande (9) est adaptée pour contrôler l'actionneur (30) en fonction d'un rapport de changement de vitesses cible, établi en divisant une vitesse de rotation cible de l'arbre d'entrée (21d) par la vitesse de rotation de l'arbre de sortie (22d), de sore que le rapport de changement de vitesses cible change en fonction d'une détérioration de l'embrayage centrifuge (25).

11. Véhicule (1) selon la revendication 10, comprenant en outre :
un capteur de l'ouverture du papillon des gaz (18a), pour détecter une ouverture du papillon des gaz ; et
un capteur de la vitesse du véhicule (42), pour détecter une vitesse du véhicule, l'unité de commande (9) déterminant la vitesse de rotation cible de l'arbre d'entrée (21d) sur la base de l'ouverture du papillon des gaz et de la vitesse du véhicule.

12. Dispositif de commande pour une transmission à variation continue à commande électronique (20), comprenant :
un mécanisme de changement de vitesses (20a), comportant un arbre d'entrée (21d), un arbre de sortie (22d) et un actionneur (30) pour changer un rapport de changement de vitesses entre l'arbre d'entrée (21d) et l'arbre de sortie (22d) ;
une unité de commande (9) pour contrôler l'actionneur (30) ;
un capteur de la vitesse de rotation de l'arbre de sortie (41), pour détecter une vitesse de rotation de l'arbre de sortie (22d) ; et
un embrayage centrifuge (25), connecté à un arbre de sortie (22d), l'embrayage centrifuge (25) étant configuré de sorte à transmettre la rotation de l'arbre de sortie (22d) à une roue motrice ou à une roue arrière (3) ;
l'actionneur (30) étant contrôlé en fonction d'un rapport de changement de vitesses cible, établi en divisant une vitesse de rotation cible de l'arbre d'entrée (21d) par la vitesse de rotation de l'arbre de sortie (22d), de sorte que le rapport de changement de vitesses cible change en fonction d'une détérioration de l'embrayage centrifuge (25).

13. Procédé de commande d'une transmission à variation continue à commande électronique (20), comportant :
un mécanisme de changement de vitesses (20a), comportant un arbre d'entrée (21d), un arbre de sortie (22d) et un actionneur (30) pour changer un rapport de changement de vitesses entre l'arbre d'entrée (21d) et l'arbre de sortie (22d) ;
une unité de commande (9) pour contrôler l'actionneur (30) ; et
un capteur de la vitesse de rotation de l'arbre de sortie (41), pour détecter une vitesse de rotation de l'arbre de sortie (22d) ; et
un embrayage centrifuge (25), connecté à un arbre de sortie (22d), l'embrayage centrifuge (25) étant configuré de sorte à transmettre la rotation de l'arbre de sortie (22d) à une roue motrice ou à une roue arrière (3) ;
le procédé comprenant les étapes ci-dessous :
détermination d'un rapport de changement de vitesses cible établi en divisant une vitesse de rotation cible de l'arbre d'entrée (21d) par la vitesse de rotation de l'arbre de sortie (22d) ; et
contrôle de l'actionneur (30) en fonction du rapport de changement de vitesses déterminé, de sorte que le rapport de changement de vitesses cible change en fonction d'une détérioration de l'embrayage centrifuge (25).
